(19) Europäisches Patentamt
European Patent Office
Office européen des brevets

(11) **EP 4 675 463 A1**

(12) **EUROPEAN PATENT APPLICATION**

(43) Date of publication:
**07.01.2026 Bulletin 2026/02**

(51) International Patent Classification (IPC):
*G06F 17/15* (2006.01)

(21) Application number: **25187037.4**

(52) Cooperative Patent Classification (CPC):
**G01W 1/10; G06F 17/15**

(22) Date of filing: **02.07.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.07.2024 KR 20240087585**

(71) Applicant: **Korea Institute of Ocean Science & Technology**
**Busan 49111 (KR)**

(72) Inventors:
• **LEE, Moonjin**
  **34033 DAEJEON (KR)**
• **KIM, Tae Sung**
  **35209 DAEJEON (KR)**
• **KIM, Yong Myung**
  **34829 DAEJEON (KR)**

(74) Representative: **EP&C**
**P.O. Box 3241**
**2280 GE Rijswijk (NL)**

(54) **APPARATUS AND METHOD FOR PREDICTING SEA LEVEL FLUCTUATIONS**

(57) An apparatus and method for predicting sea level fluctuations are disclosed. The method for predicting sea level fluctuations includes: acquiring past time-series data of past wind stress and past sea level height, determining an optimal length of a time lag of a response function representing a convolution relationship between the past wind stress and the past sea level height and a future sea level height, determining weighting factors of the past wind stress and the past sea level height in the response function to which the determined optimal length of the time lag is applied, and calculating the future sea level height using the response function to which the determined weighting factors are applied.

FIG. 1

```
Acquire data on past wind stress
and past sea level height          —S110

Determine the optimal length of the time
lag of the response function        —S120

Determine the weighting
factors of the response function    —S130

Calculate the future sea level height —S140
```

**Description**

CROSS REFERENCE TO RELATED APPLICATION

The present application claims priority to Korean Patent Application No. 10-2024-0087585 (July 3, 2024.), filed, the entire contents of which are incorporated herein for all purposes by this reference.

BACKGROUND

Technical Field

The present invention relates to an apparatus and method for predicting sea level fluctuations.

Description of Related Technology

A typhoon refers to a tropical cyclone accompanied by a storm, with a maximum wind speed at the center of 17 m/s or more, and is one of the most dangerous natural disasters.
In addition, during severe weather conditions such as a typhoon, the sea surface rises beyond the level of tidal height that can be relatively accurately predicted by astronomical tide calculations, and the elevated sea level overflows onto the land, which is referred to as a storm surge.
Such storm surges cause significant loss of life and property every year, and they occur within several hours of the onset of strong winds as a result of sea level rise caused by the strong wind. Therefore, rapid forecasting and response are essential.

Prior Art Literature

Patent Document

Korean Patent Application Registration No. 10-1172317 (August 2, 2012)

SUMMARY

The present invention is directed to providing an apparatus and method for predicting sea level fluctuations, which calculates future sea level height using a response function to past sea level rise and wind-induced sea surface stress.
According to one aspect of the present invention, a method for predicting sea level fluctuations performed by an apparatus for predicting sea level fluctuations is disclosed.
A method for predicting sea level fluctuations according to an embodiment of the present invention includes: a step of acquiring past time-series data on past wind stress and past sea level height, a step of determining an optimal length of a response time lag of a response function that represents a convolution relationship between the past wind stress and the past sea level height and a future sea level height, a step of determining weighting factors of the past wind stress and the past sea level height in the response function to which the determined optimal response time lag is applied, and a step of calculating a future sea level height using the response function to which the determined weighting factors are applied.
According to another aspect of the present invention, an apparatus for predicting sea level fluctuations is disclosed.
An apparatus for predicting sea level fluctuations according to an embodiment of the present invention includes a memory that stores instructions and a processor that executes the instructions, wherein the instructions cause the processor to perform a method for predicting sea level fluctuations, the method comprising: acquiring past time-series data on past wind stress and past sea level height, determining an optimal length of a response time lag of a response function that represents a convolution relationship between the past wind stress and the past sea level height and a future sea level height, determining weighting factors of the past wind stress and the past sea level height in the response function to which the determined optimal response time lag is applied, and calculating a future sea level height using the response function to which the determined weighting factors are applied.
The apparatus and method for predicting sea level fluctuations according to an embodiment of the present invention enable rapid prediction of future sea level rise and forecasting of storm surges caused by sea level rise during storm events, by calculating future sea level height using a response function to past sea level rise and wind-induced sea surface stress.

BRIEF DESCRIPTION OF THE DRAWINGS

FIG. 1 is a flowchart schematically illustrating a method for predicting sea level fluctuations performed by an apparatus for predicting sea level fluctuations according to an embodiment of the present invention.

FIG. 2 is a diagram schematically illustrating the configuration of an apparatus for predicting sea level fluctuations according to an embodiment of the present invention.

DETAILED DESCRIPTION

Unless clearly indicated otherwise by the context, singular expressions used in this specification include plural expressions. In this specification, terms such as "comprise" or "include" should not be interpreted as necessarily including all the components or all the steps described in the specification, and some components or some steps may be omitted, or additional components or steps may be included. Also, terms such as "...unit" or "module" described in the specification refer to a unit that processes at least one function or operation, and this may be implemented in hardware, software, or a combination of hardware and software.

Hereinafter, various embodiments of the present invention will be described in detail with reference to the accompanying drawings.

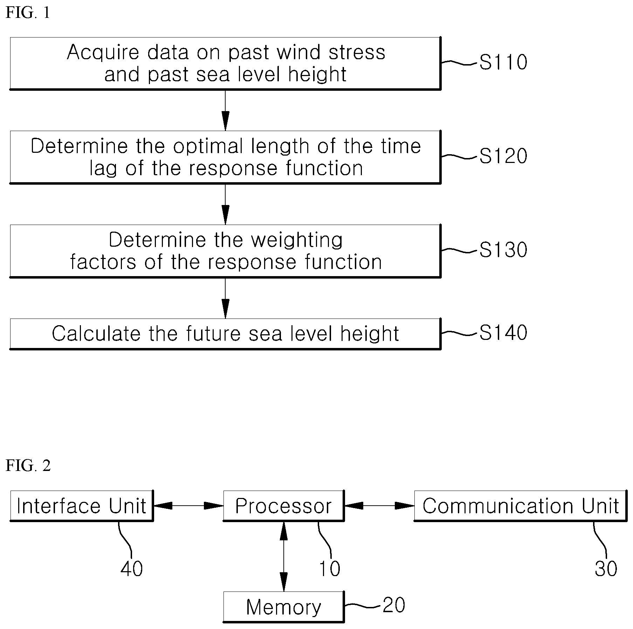

FIG. 1 is a flowchart schematically illustrating a method for predicting sea level fluctuations performed by an apparatus for predicting sea level fluctuations according to an embodiment of the present invention.

In step S110, the apparatus for predicting sea level fluctuations acquires past time-series data on past wind stress and past sea level height.

Here, the wind stress may be calculated by the following equation:

[Equation 1]

$$\tau = C_d \rho_a W$$

Here, $\tau$ is the wind stress, $C_d$ is the drag coefficient, $\rho_a$ is the air density, and W is the wind speed.

For example, data on past wind stress may include past drag coefficients, air densities, and wind speeds for a specific sea area, which can be used to calculate the past wind stress.

In step S120, the apparatus for predicting sea level fluctuations determines the optimal length of the response time lag of the response function representing the convolution relationship between past wind stress and past sea level height and future sea level height.

Here, the response function (convolution kernel) can be expressed by the following equation:

[Equation 2]

$$\zeta_t = \sum_{i=1}^{m} a_i \tau_{t-i} + \sum_{j=1}^{n} b_j \zeta_{t-j}$$

Here, $\zeta_t$ is the future sea level height, $\tau_{t-i}$ is the past wind stress, and $\zeta_{t-j}$ is the past sea level height.

i is the time lag between the past wind stress and the future sea level height, and j is the time lag between the past sea level height and the future sea level height.

m is the optimal length of the time lag between the past wind stress and the future sea level height, and n is the optimal length of the time lag between the past sea level height and the future sea level height.

$a_i$ is the weighting factor for the past wind stress, and $b_j$ is the weighting factor for the past sea level height.

First, the optimal length (m) of the time lag between past wind stress and future sea level height can be determined by analyzing the cross-correlation between the past wind stress and the past time-series data of sea level height.

Next, the optimal length (n) of the time lag between past sea level height and future sea level height can be determined by analyzing the autocorrelation of the past time-series data of sea level height.

In other words, the optimal lengths of the time lags (m, n) can be determined based on the past time points of the time-series data that exhibit the highest correlation.

In step S130, the apparatus for predicting sea level fluctuations determines the weighting factors of past wind stress and past sea level height in the response function to which the optimal lengths of the determined time lags are applied.

Specifically, the apparatus applies the past time-series data of past wind stress and past sea level height to the response function with the optimal length (m) of the time lag between past wind stress and future sea level height, and the optimal length (n) of the time lag between past sea level height and future sea level height, and then determines the weighting factors ai for past wind stress and bj for past sea level height using the least squares method.

In step S140, the apparatus for predicting sea level fluctuations calculates the future sea level height using the response function with the determined weighting factors applied.

Specifically, when a storm occurs, the apparatus applies the current time-series data of current wind stress and current sea level height to the response function with the optimal time lag lengths and weighting factors already determined, thereby calculating the future sea level height.

Furthermore, if the calculated future sea level height exceeds a predetermined storm surge threshold, the apparatus can predict the occurrence of a storm surge caused by the sea level rise and issue a storm surge forecast.

FIG. 2 is a diagram schematically illustrating the configuration of the apparatus for predicting sea level fluctuations according to an embodiment of the present invention.

Referring to FIG. 2, the apparatus for predicting sea level fluctuations according to an embodiment of the present invention includes a processor 10, a memory 20, a communication unit 30, and an interface unit 40.

The processor 10 may be a CPU or a semiconductor device that executes processing instructions stored in the memory 20.

The memory 20 may include various types of volatile or non-volatile storage media. For example, the memory 20 may include ROM, RAM, and the like.

For instance, the memory 20 may store instructions for performing the method for predicting sea level fluctuations according to an embodiment of the present invention.

The communication unit 30 is a means for transmitting and receiving data with other devices via a communication network.

The interface unit 40 may include a network interface for connecting to a network and a user interface.

Meanwhile, the components of the above-described embodiments can be easily understood from a procedural perspective. In other words, each component may be regarded as an individual process. Also, the processes of the above-described embodiments can be easily understood from the viewpoint of the device components.

Furthermore, the technical contents described above can be implemented in the form of program instructions executable by various computer means and recorded on a computer-readable medium. The computer-readable medium may include program instructions, data files, data structures, or any combination thereof.

The program instructions recorded on the medium may be specially designed and configured for the embodiments or may be known and usable by those skilled in the art in computer software. Examples of computer-readable recording media include magnetic media such as hard disks, floppy disks, and magnetic tapes; optical media such as CD-ROMs and DVDs; magneto-optical media such as floptical disks; and hardware devices specially configured to store and execute program instructions, such as ROM, RAM, and flash memory.

Examples of program instructions include not only machine language code generated by compilers but also high-level language code that can be executed by a computer using interpreters or the like. The hardware device may be configured to operate as one or more software modules to perform the operations of the embodiments, and vice versa.

The embodiments of the present invention disclosed above are for illustrative purposes, and those skilled in the art having ordinary knowledge of the invention will appreciate that various modifications, changes, and additions may be made within the spirit and scope of the present invention. Such modifications, changes, and additions should be regarded as falling within the scope of the following claims.

Description of Reference Numerals

10: Processor
20: Memory
30: Communication Unit
40: Interface Unit

**Claims**

1.  A method for predicting sea level fluctuations performed by an apparatus for predicting sea level fluctuations, the method comprising:

    acquiring past time-series data of past wind stress and past sea level height;
    determining an optimal length of a time lag of a response function representing a convolution relationship between the past wind stress and the past sea level height and a future sea level height;
    determining weighting factors of the past wind stress and the past sea level height in the response function to which the determined optimal length of the time lag is applied; and
    calculating the future sea level height using the response function to which the determined weighting factors are applied.

2.  The method for predicting sea level fluctuations according to claim 1, wherein the past wind stress is calculated using the following equation.

$$\tau = C_d \rho_a W$$

wherein, $\tau$ is the wind stress, $C_d$ is the drag coefficient, $\rho_a$ is the air density, and W is the wind speed.

3.  The method for predicting sea level fluctuations according to claim 1 or claim 2, wherein the response function is represented by the following equation.

$$\zeta_t = \sum_{i=1}^{m} a_i \tau_{t-i} + \sum_{j=1}^{n} b_j \zeta_{t-j}$$

wherein, $\zeta_t$ is the future sea level height, $\tau_{t-i}$ is the past wind stress, and $\zeta_{t-j}$ is the past sea level height.
i is the time lag between the past wind stress and the future sea level height, and j is the time lag between the past sea level height and the future sea level height.
m is the optimal length of the time lag between the past wind stress and the future sea level height, and n is the optimal length of the time lag between the past sea level height and the future sea level height.
$a_i$ is the weighting factor for the past wind stress, and $b_j$ is the weighting factor for the past sea level height.

4.  The method for predicting sea level fluctuations according to any one of the preceding claims, in particular claim 3, wherein the step of determining the optimal length comprises analyzing the cross-correlation between the past wind stress and the past time-series data of sea level height to determine the optimal length (m) of the time lag between the past wind stress and the future sea level height.

5.  The method for predicting sea level fluctuations according to any one of the preceding claims, in particular to claim 4, wherein the step of determining the optimal length comprises analyzing the autocorrelation of the past time-series data of sea level height to determine the optimal length (n) of the time lag between the past sea level height and the future sea level height.

6.  The method for predicting sea level fluctuations according to any one of the preceding claims, in particular to claim 5, wherein the step of determining the weighting factors comprises applying the past time-series data of past wind stress and past sea level height to the response function with the determined optimal time lag lengths (m, n), and determining the weighting factors ai for the past wind stress and bj for the past sea level height by using the least squares method.

7. An apparatus for predicting sea level fluctuations, comprising:

a memory configured to store instructions; and
a processor configured to execute the instructions,
wherein the instructions cause the apparatus to perform a method comprising:

acquiring past time-series data of past wind stress and past sea level height;
determining an optimal length of a time lag of a response function representing a convolution relationship between the past wind stress and the past sea level height and a future sea level height;
determining weighting factors of the past wind stress and the past sea level height in the response function to which the determined optimal length of the time lag is applied; and
calculating the future sea level height using the response function to which the determined weighting factors are applied.

FIG. 1

```
┌─────────────────────────────────────┐
│     Acquire data on past wind stress │─── S110
│     and past sea level height        │
└─────────────────────────────────────┘
                    │
                    ▼
┌─────────────────────────────────────┐
│  Determine the optimal length of the time │─── S120
│       lag of the response function   │
└─────────────────────────────────────┘
                    │
                    ▼
┌─────────────────────────────────────┐
│        Determine the weighting       │─── S130
│    factors of the response function  │
└─────────────────────────────────────┘
                    │
                    ▼
┌─────────────────────────────────────┐
│    Calculate the future sea level height │─── S140
└─────────────────────────────────────┘
```

FIG. 2

```
┌────────────────┐      ┌───────────┐      ┌────────────────────┐
│ Interface Unit │◄───►│ Processor │◄───►│ Communication Unit │
└────────────────┘      └───────────┘      └────────────────────┘
        │                  ▲   │                     │
        40                 │   10                    30
                           ▼
                    ┌───────────┐
                    │  Memory   │─── 20
                    └───────────┘
```

Europäisches
Patentamt
European
Patent Office
Office européen
des brevets

# EUROPEAN SEARCH REPORT

**Application Number**

EP 25 18 7037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/11537 A1 (US NAVY [US]; JACOBS GREGG A [US]) 15 February 2001 (2001-02-15) * page 6, line 4 - page 19, line 1; figures 1-5 * ----- | 1-7 | INV. G06F17/15 |
| A | CN 115 357 672 A (OCEAN UNIV CHINA) 18 November 2022 (2022-11-18) * the whole document * ----- | 1-7 | |

**TECHNICAL FIELDS SEARCHED (IPC)**

G01W
G06F

The present search report has been drawn up for all claims

| Place of search | Date of completion of the search | Examiner |
|---|---|---|
| The Hague | 14 November 2025 | Rosello Garcia, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&: member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 7037

This annex lists the patent family members relating to the patent documents cited in  the above-mentioned European search report.
The members are as contained in the European Patent Office EDP file on
The European Patent Office is in no way liable for these particulars which are merely given for the purpose of information.

14-11-2025

| Patent document cited in search report | | Publication date | Patent family member(s) | | Publication date |
|---|---|---|---|---|---|
| WO 0111537 | A1 | 15-02-2001 | AU | 5923300 A | 05-03-2001 |
| | | | US | 6256586 B1 | 03-07-2001 |
| | | | WO | 0111537 A1 | 15-02-2001 |
| CN 115357672 | A | 18-11-2022 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240087585

- KR 101172317